# EUROPEAN PATENT APPLICATION

(11) **EP 3 647 279 A1**
(43) Date of publication of application: **06.05.2020**
(21) Application number: 18825475.9
(22) Date of filing: 28.06.2018
(51) Int. Cl.: C02F 11/12

(54) **WET SLUDGE DRYING METHOD AND FLUIDIZED BED DRYER**

(30) Priority: 29.06.2017 CN 201710514941
(71) Applicant: Shaanxi Xuanyi environmental technology co., Ltd., Xi'an City Shanxi 710077 (CN)
(72) Inventor: Yu, Guohao, Yanta District Xi'an, Shaanxi 710043 (CN); Zhang, Dongmei, Yanta District Xi'an, Shaanxi 710043 (CN)
(74) Representative: Boult Wade Tennant LLP
(86) International application number: PCT/CN2018/093348
(87) International publication number: WO 2019/001512

(57) **Abstract**

A fluidized bed dryer, comprising at least two channels (1) connected in parallel; at least one wet sludge inlet (3) is provided at the tops of dilute phase zones (5) or above the dilute phase zones (5) in the channels (1), and at least one solid particle heat carrier and one material outlet are provided in dense phase zones (4) in the channels (1); the channels (1) are physically separated, from the middles of the dense phase zones (4) to the bottoms of the dense phase zones (4), in the material flow direction; the width of the bottoms of the dense phase zones (4) is less than the width of the tops of the dense phase zones (4) of the channels (1); the sum of the surface widths of the dense phase zones (4) of the channels (1) is greater than the flow length of sludge and the solid particle heat carrier in the flow direction; the height difference between solid particle heat carrier inlets (6) and air inlets (7) below the dense phase zones should be less than 3/4 of the height of a material in the dense phase zones (4) when the material is stationary, and the distance between the solid particle heat carrier inlets and the side walls is no more than 10 cm. Further disclosed is a wet sludge drying method.

## Description

### Technical Field

The invention relates to a drying method and a fluidized bed dryer for wet sludge, especially, a method for drying wet sludge by using particles at a medium temperature, and a fluidized bed dryer for sludge in which multi-channels containing particles at a medium temperature as heat carriers are parallel.

### Background

The fluidized bed dryer for sludge by using solid particles as heat carriers has many advantages over that having thermally conductive oil and steam as heat carriers. A good fluidized bed dryer for sludge by using solid particles as heat carriers requires the characteristics that follows sludge, particles and fluidized bed.

Patent CN203007102U proposed a fluidized bed dryer for sludge by using particles as heat carriers, wherein, in addition to the dense phase zone, settling section and air distribution device which are commonly used by the fluidized bed equipment, this dryer has the following basic characteristics: particles at a high temperature of 600 °C -1000°C; single feeding point; the longitudinal section along the flow direction of the materials being trapezoid and having a lateral-surface aspect ratio of 5-10. However, defects may be caused by the above characteristics.
(1) defects caused by particles at a high temperature of 600 °C -1000°C and the single feeding point;
   Domestic sludge contains a dry ash-free volatile matter in amount of up to about 85%, which is close to oil shale and much higher than that of lignite and long flame coal both of which are the most combustible coals, thus belonging to a flammable fuel. The test shows that the dry sludge ignites at 400°C and burns out at 600°C. Generally, the heat-source temperature in a running fluidized bed dryer is below 300°C. Even if the temperature is not higher than the ignition temperature, special attention has been paid to avoiding ignition or even deflagration. In a fluidized bed dryer for sludge by using particles as heat carriers, the entry temperature of the particles is associated with the particle flux. Basically, the particle flux is inversely proportional to the temperature difference between the inlet and outlet, and a large temperature difference can reduce the particle flux. However, the higher the inlet temperature is, the greater the possibility of ignition or even deflagration is.
   It is proposed in that patent that wet sludge is dried by using particles at a temperature of up to 600 °C -1000°C, as heat source, taken from a combustion furnace. Since the feeding point is limited in its number due to particles at extremely high temperature, a high-temperature zone is easily formed near the feeding point, leading to a trend of combustion or even explosion of wet sludge here. Meanwhile, the entry of wet sludge from a high temperature end will cause particles burst rapidly due to the rapid evaporation of water. A large number of small particles will dry quickly. Once it is dried out, the temperature will rise rapidly when it is heated again, rendering it more dangerous.
(2) defects caused by trapezoid in the longitudinal section along the flow direction of the materials and a lateral-surface aspect ratio of 5-10;

It is required in that patent that the longitudinal section along the flow direction of the materials is trapezoid and has a lateral-surface aspect ratio of 5-10. However, in a thin and long channel, it is required for particles to have an average lateral travel rate of greater than 0.05 m/s, which requires a very high fluidization speed and a very large power. Therefore, the standard-state fluidization speed of 0.1-0.4 m/ s is no longer enough.

### Summary of the Invention

The present invention provides a drying method and a fluidized bed dryer for wet sludge, which mainly solves the problem that particles at a high temperature used in the prior art easily cause combustion and even industrial accidents, while the use of particles at a medium temperature within the prior-art technical framework would lead to insufficient sludge drying.

The present invention is carried out as follows:
A method for drying wet sludge comprises steps of:
1) supplying solid particles as heat carriers at a temperature of 200°C -500°C, through multiple (that is, at least two) feeding points, to a dense phase zone at the inlet end of multiple (that is, at least two) fluidized bed channels for drying wet sludge;
   the height difference between the inlet of the feeding point into the dense phase zone and the air inlet below the dense phase zone shall be less than 3/4 of the height of the materials in the dense phase zone when they are still, and the distance between the inlet for said solid particles as heat carriers and the side wall does not exceed 10 cm;
   the minimum height is not less than 10 cm from the outlet below the dense phase zone;
2) supplying the wet sludge to be dried, which, depending on its own gravity, passes through a headspace above a lean phase zone, the lean phase zone, and then enters the dense phase zone at the same end as the inlet for heat carrier particles;
   the inlet ends for the wet sludge and solid particles as heat carriers forms a channel together with the dense phase zone at the other end from which the final materials outflow, and the ratio of the number of channels to the number of feeding points in step 1) is 1:1 to 5;
   the surface layers of the channels are connected with each other, and the sum of the width of the lean phase zone in all the channel is 1.5-3 times of the flow length of sludge and solid particles as heat carriers in the channel;
3) allowing the wet sludge to exchange heat with solid particles as heat carriers supplied in step 1) below the lean phase zone and in the dense phase zone, thus complete drying, and then flow out through the discharge port of the dense phase zone.

Preferably, in step 2), when the number of channels formed by the wet sludge dropping is 2 or more, the physical separation between adjacent channels shall be started at least from the middle part of the dense phase zone at the side away from the its bottom side.

Preferably, in step 2), the total width of the channels is 1.5-3 times of the flow length of sludge and solid particles as heat carriers.

This fluidized bed dryer for wet sludge comprises at least two parallel channels, in which at least one inlet for wet sludge is arranged on the top of the lean phase zone or above the lean phase zone in each channel, and at least one outlet for solid particles as heat carriers and one outlet for materials are arranged in the dense phase zone of the channel, each channel being physically separated along the flow direction of materials from the middle part of dense phase zone to its bottom, the width of the bottom of the dense phase zone being smaller than the width of the top of the dense phase zone in each channel, and the sum of the surface width of the dense phase zones in all the channels being larger than the flow length along the flow direction of the sludge and solid particles as heat carriers; the height difference between the inlet for said solid particles as heat carriers and the air inlet below the dense phase zone shall be less than 3/4 of the height of the materials in the dense phase zone when they are still, and the distance between the inlet for said solid particles as heat carriers and the side wall does not exceed 10 cm.

Preferably, the sum of the width of the lean phase zone in all the channels is 1.5-3 times of the flow length of sludge and solid particles as heat carriers in the channel.

Preferably, the number of the parallel channels is 2-6.

Preferably, each channel has 1-3 inlets for solid particles as heat carriers.

Preferably, the longitudinal section perpendicular to the flow direction of solid particles in each channel has a rectangle bottom with a height of 100-400 mm, a trapezoid above the bottom, and a common dense phase zone and lean phase zone merged by the channels above the trapezoid.

The invention has the following advantages:
(1) solid particles at a medium temperature as the heat carriers can be used in the drying method and fluidized bed dryer for wet sludge, which can reduce the industrial accident to 0 and greatly improve the safety of wet sludge drying.
(2) the problem associated with particles at a medium temperature and flammable sludge and the contradiction of a large particle flow with a low material level difference between the inlet and the outlet, as well as a small amount of fluidizing gas can be properly solved by the drying method and fluidized bed dryer for wet sludge.

### Brief Description of the Accompanying Drawings

Figure 1 is the front view of the structure according to the present invention.
Figure 2 is the side view of the structure according to the present invention.

### Detailed Description of the Invention

The principle underlying the present invention is that the particles as heat carriers are required to enter via scattered and multiple feeding points and enter the most intense backmixing area in the fluidized bed in a form of underflow.

The scattered multiple feeding points may be realized by processing in separate channels and multiple entry of solid particles as heat carriers through many points. In addition, entering the most intense backmixing area in the fluidized bed in a form of underflow specifically means that the entry points are in the downward area below the middle part of the dense phase zone in the fluidized bed, and solid particles as heat carriers flow downward after entry, and then are driven by rising bubbles and emulsion packets to the surface of the dense phase zone, where the temperature difference between the solid particles and surrounding particles is less than 100°C.

Wet sludge and particles as heat carriers are fed in the same area to form the most intense backmixing area in the fluidized bed, in which particles have the highest temperature and sludge has the highest water content. Under the action of particles in the fluidized bed, the wet sludge particles burst to form many smaller particles, leading to a rapid water evaporation, and hence the generated steam significantly enhances the fluidization process, forming the most intense backmixing area in the fluidized bed. Particles in the well fluidized bed has a large longitudinal diffusion coefficient, but a slow lateral diffusion. The height difference of material level must be relied on in order to achieve the flow of particles in the bed; however, since a large height difference will cause uneven air distribution, the fluidized bed dryer for sludge by using particles as heat carriers should be wide and short, rather than thin and long. Accordingly, multiple channels with trapezoidal cross section are adopted because of a too large bottom area of the dense phase zone, a large amount of fluidizing gas, and high power consumption.

Based on the above principle, solid particles as heat carriers used in the present invention absorbs heat not from the combustion furnace, but from the flue gas flowing out from the furnace, so the solid particles as heat carriers have a temperature of 200 °C -500°C.

Specifically, the method according to the invention is as follows:
Firstly, supplying solid particles as heat carriers at a temperature of 200 °C -500°C, through multiple feeding points, to the inlet end of the dense phase zone for drying wet sludge; supplying the wet sludge to be dried while supplying solid particles as heat carriers, wherein, the wet sludge, depending on its own gravity, passes through headspace above a lean phase zone, the lean phase zone, and then enters the inlet end of the dense phase zone; allowing the wet sludge to exchange heat with solid particles as heat carriers below the lean phase zone and dense phase zone, thus complete drying, and then flow out through the discharge port at the outlet end of the dense phase zone.

The height difference between the inlet of the feeding point into the dense phase zone and the air inlet below the dense phase zone shall be less than 3/4 of the height of the materials in the dense phase zone when they are still, and the distance between the inlet for said solid particles as heat carriers and the side wall does not exceed 10 cm; that is, it is supplied to the downward area in a form of underflow.

This fluidized bed dryer for wet sludge includes at least two parallel channels, in which at least one inlet for wet sludge is arranged on the top of the lean phase zone or above the lean phase zone, and at least one outlet for solid particles as heat carriers and one outlet for materials are arranged in the dense phase zone, each channel being physically separated along the flow direction of materials from the middle part of dense phase zone to its bottom, the width of the bottom of the dense phase zone being smaller than that of its top in each channel, and the sum of the surface width of the dense phase zones in each channel being larger than the flow length along the flow direction of the sludge and solid particles as heat carriers; the height difference between the inlet for said solid particles as heat carriers and the air inlet below the dense phase zone shall be less than 3/4 of the height of the materials in the dense phase zone when they are still, and the distance between the inlet and the side wall does not exceed 10 cm.

The dropped wet sludge forms the channels, and the ratio between the number of channels and the number of feeding points in step 1 is 1:1-5; the main considerations for the number of channels are the uniformity of heat exchange and the cost of multipoint feeding configuration, that is, the reasonable selection of the number of feeding points on the premise of ensuring the relative uniformity.

The total width of the channel is larger than the flow length of wet sludge, which has been explained in the preceding principle part. However, in terms of the rationality of the working site space and the overall layout, the sum of the surface width of the dense phase zone in each channel is 1.5-3 times of the flow length of sludge and solid particles as heat carriers along its flow direction.

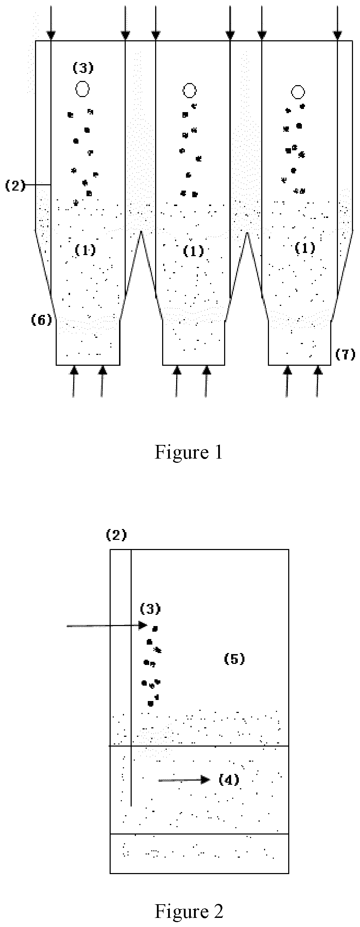

The structure according to the present invention is detailed below by reference to the attached drawings:
As shown in Figures 1 and 2, the fluidized bed dryer for wet sludge includes at least two parallel channels 1 (considering the actual working site space and the rationality of the structure, there are generally arranged 2 -6 channels). Each channel 1 refers to the space formed from the inlet end to the outlet end of the wet sludge, in which at least one inlet for wet sludge 3 is arranged on the top of the lean phase zone 5 or above the lean phase zone 5; the physical separation between each channel 1 is started from the top of the dense phase zone 4 or at least above the middle part of the dense phase zone 4 away from its bottom; the width of the bottom of the dense phase zone 4 is smaller than the width of the top of the lean phase zone 5 in each channel, and the sum of width of the lean phase zone 5 in each channel is larger than the flow length of the wet sludge in channel 1; the dense phase zone 4 in each channel 1 is also provided with at least one inlet 6 for solid particles as heat carriers; the height difference between the inlet 6 for said solid particles as heat carriers and the air inlet 7 below the dense phase zone shall be less than 3/4 of the height of the materials in the dense phase zone 4 when they are still, and the distance between the inlet and the side wall does not exceed 10 cm.

The inlet of the solid particles as heat carriers is perpendicular to the side wall of the discharge port end, wherein, the longitudinal section perpendicular to the flow direction of solid particles has a rectangle bottom with a height of 100-400 mm, a trapezoid above the bottom, and a common dense phase zone 4 and lean phase zone 5 merged by each channel above the trapezoid.

When the materials in still have a height of more than 1 m in dense phase area, the average lateral travel rate of particles is less than 0.01 m/s, and the material level difference between inlet and outlet is not more than 10% of the average material level.

As described above, a good fluidized bed dryer for sludge by using particles as heat carriers has a key feature that it can properly solve the problem associated with particles at a high temperature and flammable sludge and the contradiction of a large particle flow with a low material level difference between the inlet and the outlet as well as a small amount of fluidizing gas.

## Claims

1. A method for drying wet sludge **characterized in** comprising steps of:
1) supplying solid particles as heat carriers at a temperature of 200°C -500°C, through at least two feeding points, to a dense phase zone at the inlet end of at least two fluidized bed channels for drying wet sludge; the height difference between the inlet of the feeding point into the dense phase zone and the air inlet below the dense phase zone shall be less than 3/4 of the height of the materials in the dense phase zone when they are still, and the distance between the inlet for said solid particles as heat carriers and the side wall does not exceed 10 cm; the minimum height is not less than 10 cm from the outlet below the dense phase zone;
2) supplying the wet sludge to be dried, which, depending on its own gravity, passes through a headspace above a lean phase zone, the lean phase zone, and then enters the dense phase zone at the same end as the inlet for solid particles as heat carriers; the inlet ends for the wet sludge and solid particles as heat carriers form a channel together with the dense phase zone at the other end from which the final materials outflow, each channel having inlets for the wet sludge and solid particles as heat carriers, and outlets for dried sludge and solid particles as heat carriers, and the ratio of the number of channels to the number of feeding points in step 1) is 1:1 to 5;
the surface layers of the channels are connected with each other, and the sum of the width of the lean phase zone in all the channels is 1.5-3 times of the flow length of sludge and solid particles as heat carriers in the channel; and
3) allowing the wet sludge to exchange heat with solid particles as heat carriers supplied in step 1) in the dense phase zone, thus complete the drying, and then flow out through the discharge port below the outlet end of the dense phase zone.

2. The method for drying wet sludge according to claim 1, **characterized in that**, in said step 2), when the number of channels formed by the wet sludge dropping is 2 or more, the physical separation between adjacent channels is started at least from the middle part of the dense phase zone at the side away from the its bottom side.

3. The method for drying wet sludge according to claim 1, **characterized in that**, in said step 2), the total width of the channels is 1.5-3 times of the flow length of sludge and solid particles as heat carriers.

4. A fluidized bed dryer for wet sludge, **characterized in that**, the fluidized bed dryer comprises at least two parallel channels, in which at least one inlet for wet sludge is arranged on the top of the lean phase zone or above the lean phase zone in each channel, and at least one outlet for solid particles as heat carriers and one outlet for materials are arranged in the dense phase zone of the channel, each channel being physically separated along the flow direction of materials from the middle part of dense phase zone to its bottom, the width of the bottom of the dense phase zone being smaller than the width of the top of the dense phase zone in each channel, and the sum of the surface width of the dense phase zones in all the channels being larger than the flow length along the flow direction of the sludge and solid particles as heat carriers; the height difference between the inlet for said solid particles as heat carriers and the air inlet below the dense phase zone shall be less than 3/4 of the height of the materials in the dense phase zone when they are still, and the distance between the inlet for said solid particles as heat carriers and the side wall does not exceed 10 cm.

5. A fluidized bed dryer for wet sludge according to claim 4, **characterized in that**, the sum of the surface width of the dense phase zone in all the channels is 1.5-3 times of the flow length of the sludge and solid particles as heat carriers in its flow direction.

6. A fluidized bed dryer for wet sludge according to claim 4, **characterized in that**, the number of the parallel channels is 2-6.

7. A fluidized bed dryer for wet sludge according to claim 4, **characterized in that**, each channel has 1-3 inlets for the solid particles as heat carriers.

8. A fluidized bed dryer for wet sludge according to claim 4, **characterized in that**, the longitudinal section perpendicular to the flow direction of solid particles and the materials of each channel has a rectangle bottom with a height of 100-400 mm, a trapezoid above the bottom, and a common dense phase zone and lean phase zone merged by the channels above the trapezoid.
